# EUROPÄISCHE PATENTSCHRIFT

(11) **EP 0 895 825 B1**
(45) Veröffentlichungstag und Bekanntmachung des Hinweises auf die Patenterteilung: **07.08.2002**
(21) Anmeldenummer: 98109888.2
(22) Anmeldetag: 29.05.1998
(51) Int. Cl.: B23B 49/04

(54) **Zentriermaschine**
Apparatus for centering
Machine à centrer

(30) Priorität: 08.08.1997 DE 19734301
(43) Veröffentlichungstag der Anmeldung: 10.02.1999
(73) Patentinhaber: ILG GmbH, 71554 Weissach i.T. (DE)
(72) Erfinder: Ilg, Herbert, 71554 Weissach i.T. (DE)
(74) Vertreter: Thul, Stephan, Dipl.-Phys.

(56) Entgegenhaltungen:
- CH-A- 343 753
- US-A- 3 400 618
- PATENT ABSTRACTS OF JAPAN vol. 007, no. 165 (M-230), 20. Juli 1983 & JP 58 071020 A (AMADA GIJUTSU SERVICE KK;OTHERS: 02), 27. April 1983

## Beschreibung

Die vorliegende Erfindung betrifft eine Werkzeugmaschine zum Anbringen von Zentren an wellenförmigen Werkstücken, insbesondere Schmiedestücke oder Fließpreßteile, durch Drehbearbeitung des Werkstückes, insbesondere Bohren zentraler Ausnehmungen oder Abdrehen von zentralen Zapfen an zwei voneinander abgewandten Stirnseiten des Werkstückes, mit einer Bearbeitungsstation mit mindestens einer Zentriereinrichtung zum Herstellen der Zentren und Mitteln zum Zuführen und Abführen der Werkstücke zur Bearbeitungsstation.

Bei der Herstellung von Wellen und ähnlichen Werkstücken werden an diesen nach dem Ablängen auf die gewünschte Werkstücklänge Zentren angebracht, die für alle nachfolgenden Bearbeitungsschritte des Werkstückes verwendet werden. Die Werkstücke werden hierfür wahlweise mit Ausnehmungen oder Zapfen versehen, mittels welcher die Werkstücke in nachfolgenden Bearbeitungsmaschinen zentriert eingespannt werden können. Durch diese Vorgehensweise ist gewährleistet, daß die Werkstükke bei allen Bearbeitungsschritten auf dasselbe Zentrum zentriert sind. Dies ist für eine exakte Bearbeitung der Werkstücke wichtig.

Bei bekannten Werkzeugmaschinen dieser Art werden die Werkstücke über ein getaktetes Förderband Fräs- und Bohrspindeleinrichtungen zum Ablängen und Herstellen von Zentrierbohrungen oder -zapfen zugeführt und wieder abgeführt. Die Werkstücke werden also in einer linearen Bewegung horizontal durch die Werkzeugmaschine transportiert und taktweise bearbeitet. Dies ist von der Bearbeitungszeit her zwar vorteilhaft, hat jedoch einen verhältnismäßig hohen Platzbedarf, da die Abläng- und Zentriereinrichtungen hintereinander angeordnet sind und sich so insgesamt eine große Länge der Werkzeugmaschine ergibt.

Eine Werkzeugmaschine mit den Merkmalen des Oberbegriffs des Anspruchs 1 ist aus der JP 58 071020 A bekannt.

Der Erfindung liegt die Aufgabe zugrunde, eine Werkzeugmaschine der eingangs genannten Art anzugeben, welche einen geringeren Platzbedarf aufweist.

Diese Aufgabe wird durch die Merkmale des Anspruchs 1 gelöst.

Im Unterschied zu bekannten Werkzeugmaschinen dieser Art werden die Werkstücke erfindungsgemäß also nicht linear und horizontal durch die Werkzeugmaschine bewegt. Vielmehr werden die Werkstücke durch die Greifvorrichtung von einer Werkstückaufnahmeposition angehoben und in einer geeigneten Bewegung der Zentriervorrichtung zugeführt. Nach der Herstellung des Zentrums können die Werkstücke entsprechend durch die Greifvorrichtung von der Zentriervorrichtung zu einer Werkstückablageposition transportiert werden. Die Greifvorrichtung führt also eine kombinierte Hub-, Senk- und Horizontalbewegung aus. Die Zu- und Abfuhr der Werkstücke von der Werkstückaufnahmeposition und der Werkstückablageposition erfolgt durch geeignete Transportmittel bekannter Art, beispielsweise Prismen-Taktbänder.

Durch die erfindungsgemäße Ausgestaltung kann die Werkzeugmaschine besonders platzsparend aufgebaut werden. Dieser Vorteil wird noch vergrößert, wenn die Werkzeugmaschine zusätzlich mit einer Ablängeinrichtung für die Werkstücke versehen ist. Durch das Halten der Werkstücke während dem Ablängen und Herstellen der Zentren mit der Greifvorrichtung können außerdem separate Spannmittel eingespart werden. Insgesamt ergibt sich dadurch eine kompakt aufgebaute Werkzeugmaschine, mit der schnell und geschickt Werkstücke für nachfolgende Drehbearbeitungen abgelängt und mit Zentren versehen werden können.

Bevorzugt ist die Greifvorrichtung auf einem in mindestens zwei zueinander senkrechten Richtungen verfahrbaren Schlitten angeordnet, wobei der Schlitten bevorzugt numerisch gesteuert ist. Durch diese Ausgestaltung wird eine exakte Positionierung der Werkstücke in der Bearbeitungsstation gewährleistet.

Nach einer weiteren Ausgestaltung der Erfindung umfaßt die Maschine eine Fräseinrichtung, durch welche die Werkstücke stirnseitig ablängbar sind. Bevorzugt ist es dabei, wenn die Fräseinrichtung und die Zentriereinrichtung vertikal übereinander angeordnet sind. Der Platzbedarf der Werkzeugmaschine wird hierdurch gering gehalten, und die Werkstücke können der Fräseinrichtung und der Zentriereinrichtung nacheinander in einer linearen Bewegung zugeführt werden.

Besonders bevorzugt ist es, wenn die Werkstücke durch die Greifvorrichtung zuerst der Fräseinrichtung und dann der Zentriereinrichtung zugeführt werden. Durch diese Ausgestaltung ist es möglich, die Fräseinrichtung auf eine jeweils zu bearbeitende Werkstückart fixiert anzuordnen, während die Bohr- oder Fräseinheiten der Zentriereinrichtung zusammenund wieder auseinanderfahrbar sind und dadurch genügend Platz zum Durchführen der Werkstücke freigeben.

Nach einer weiteren Ausgestaltung der Erfindung weist die Werkzeugmaschine eine Sägeeinrichtung zum Ablängen von Stangenmaterial auf. Bevorzugt ist es hierbei, wenn das abzusägende Stück von der Greifvorrichtung gehalten wird. Eine separate Haltevorrichtung kann hierdurch entfallen, und das abgesägte Werkstück befindet sich sofort in der Greifvorrichtung, welche dann das Werkstück zur Bearbeitungsstation transportiert. Die erfindungsgemäße Verwendung einer Greifvorrichtung zur Zuund Abfuhr der Werkstücke ermöglicht also in geschickter Weise die Kombination der Zentrier- und gegebenenfalls Fräseinrichtung mit einer Sägeeinrichtung in einer einzigen Werkzeugmaschine. Wenn die durch die Sägeeinrichtung erzielbare Längengenauigkeit des Werkstückes ausreichend ist, kann die Fräseinrichtung aber auch entfallen, so daß sich nur eine Kombination aus einer Zentriereinrichtung und einer Sägeeinrichtung in einer Werkzeugmaschine ergibt. Grundsätzlich kann die erfindungsgemäße Werkzeugmaschine auch nur mit einer Fräseinrichtung versehen sein, welcher dann über die Greifvorrichtung die Werkstückrohlinge zugeführt werden. Neben der geschickten Handhabung der Werkstücke ergibt sich in allen Fällen auch ein geringer Platzbedarf.

Die Verwendung eines hydraulischen Greifers hat sich als besonders vorteilhaft herausgestellt. Ebenso ist es vorteilhaft, wenn die Werkstückaufnahmeposition und die Werkstückablageposition auf voneinander abgewandten Seiten der Bearbeitungsstation angeordnet sind. Die Zu- und Abfuhr der Werkstücke ist somit voneinander unbeeinflußt und kann dadurch optimiert werden.

Ausführungsbeispiele der Erfindung sind in der Zeichnung dargestellt und werden nachfolgend beschrieben. Es zeigen, jeweils in schematischer Darstellung,
- Fig. 1: eine Vorderansicht einer erfindungsgemäßen Werkzeugmaschine,
- Fig. 2: eine Seitenansicht der Werkzeugmaschine von Fig. 1 und
- Fig. 3: eine Vorderansicht einer Variante der erfindungsgemäßen Werkzeugmaschine.

Auf einem Untergestell 1 ist ein Maschinenständer 2 angeordnet, der seinerseits einen Schlitten 3 trägt, an welchem ein hydraulischer Spannstock 4 angeordnet ist. Der Spannstock 4 weist hydraulisch betätigbare Spannbacken 5, 6 auf, mit denen ein Werkstück einspannbar ist.

Über X-Führungen 7 und Z-Führungen 8 kann der Schlitten 3 mit dem Spannstock 4 zwischen einer Werkstückaufnahmeposition 9, einer Bearbeitungsstation 10 und einer Werkstückablageposition 11 bewegt werden.

Die Bewegung erfolgt dabei mit einer nicht dargestellten CNC-Steuerung. Die Zufuhr der Werkstückrohlinge 12 zur Werkstückaufnahmeposition 9 und die Abfuhr der bearbeiteten Werkstücke 13 von der Werkstückablageposition 11 erfolgt bevorzugt durch Transportbänder.

Die Bearbeitungsstation 10 umfaßt eine Zentriereinrichtung 14 und eine Fräseinrichtung 15, wobei die Zentriereinrichtung 14 vertikal oberhalb der Fräseinrichtung 15 angeordnet ist. Die Zentriereinrichtung 14 ist dabei beispielsweise als Spindeleinheit ausgestaltet, durch welche in die Stirnseiten des Werkstückrohlings 12 zentrale Sacklochbohrungen eingebracht werden können. Alternativ kann auch eine Einrichtung vorgesehen sein, durch welche stirnseitige Zapfen an dem Werkstückrohling 12 abdrehbar sind. Die Spindeleinheit ist längs der Spindelachse zusammen- und auseinanderfahrbar, um die Bohrungen einzubringen. Die Fräseinrichtung 15 zum Ablängen des Werkstückrohlings 12 ist dagegen stationär ausgebildet.

Zur Bearbeitung der Werkstückrohlinge 12 werden diese von der Werkstückaufnahmeposition 9 mittels der Spannbacken 5, 6 aufgenommen, indem der Schlitten 3 mit dem Spannstock 4 entsprechend bewegt wird. Über den Schlitten 3 werden die Werkstückrohlinge 12 dann von der Werkstückaufnahmeposition 9 zur Bearbeitungsstation 10 gebracht, wo sie zunächst der Fräseinrichtung 15 zugeführt werden. Hierfür wird die Spindeleinheit 14 auseinandergefahren. Nach dem Ablängen der Werkstückrohlinge 12 in der Fräseinrichtung 15 werden diese wiederum mittels des Schlittens 3 der Zentriereinrichtung 14 zugeführt, wo sie mit dem Zentrum versehen werden. Sowohl in der Fräseinrichtung 15 als auch in der Zentriereinrichtung 14 werden die Werkstückrohlinge 12 durch die Spannbacken 5, 6 gehalten. Die bearbeiteten Werkstücke 13 werden dann wiederum durch eine entsprechende Schlittenbewegung auf der Werkstückablageposition 11 abgelegt, von wo sie abtransportiert werden können.

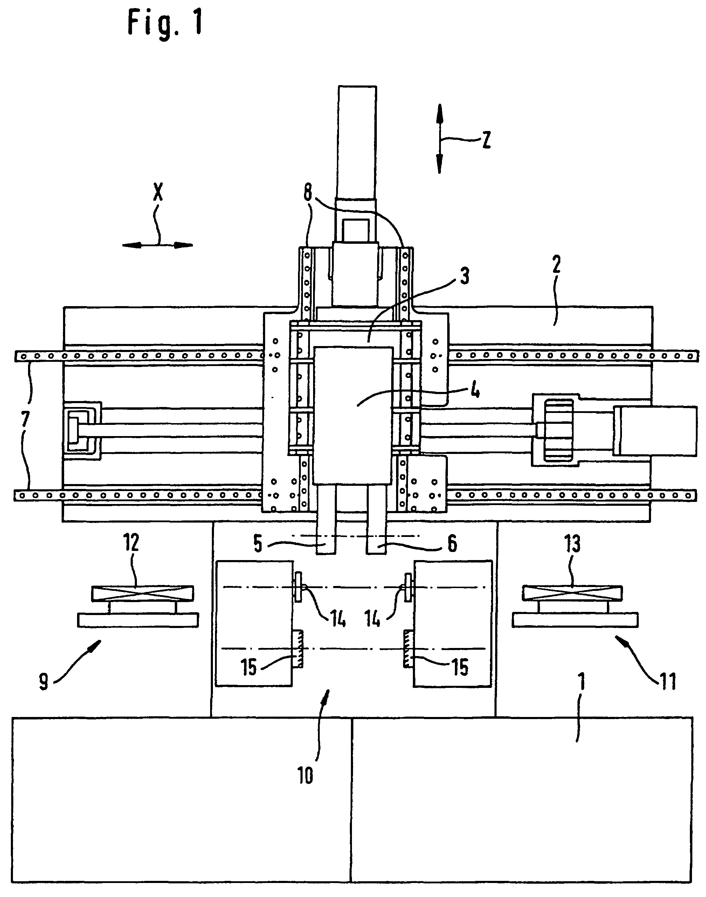

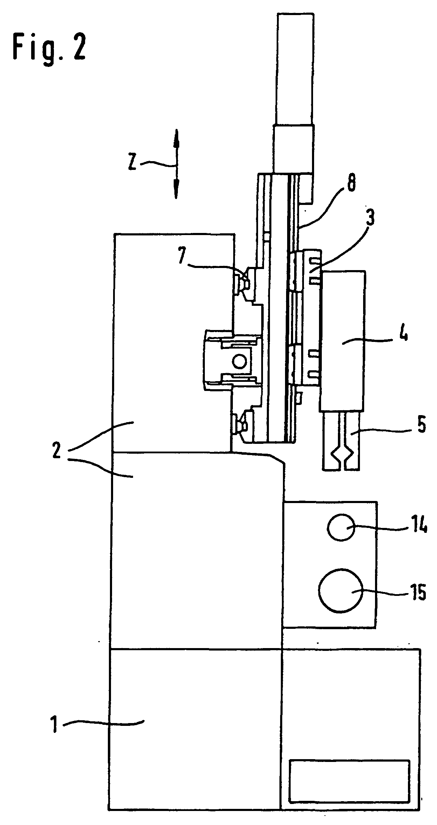

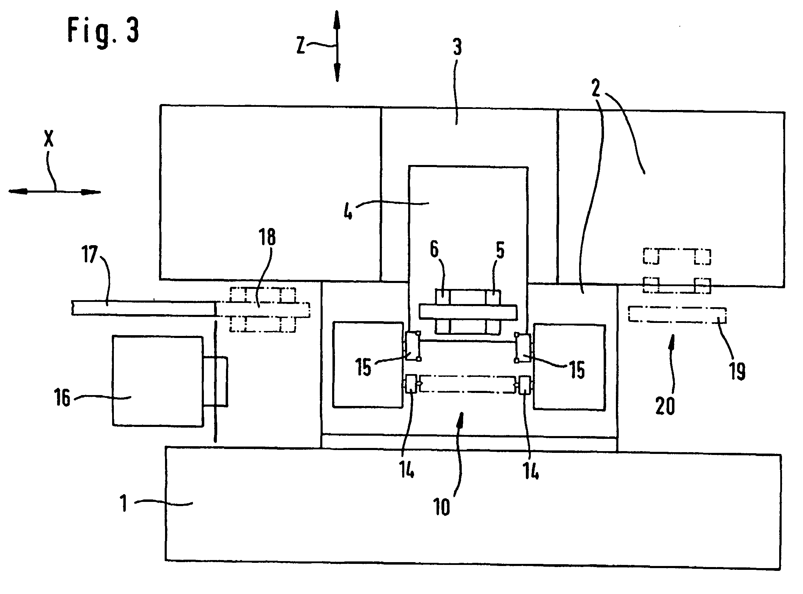

Die in Fig. 3 dargestellte Variante einer erfindungsgemäßen Werkzeugmaschine stimmt vom grundsätzlichen Aufbau mit der Variante von Fig. 1 und Fig. 2 überein. Anstelle eines Zuführbandes zur Zuführung von Werkstückrohlingen auf die Werkstückaufnahmeposition 9 ist hier jedoch eine Sägeeinrichtung 16 vorgesehen, welche zum Ablängen von Stangenmaterial 17 dient. Die Sägeeinrichtung 16 ist dabei so angeordnet, daß der abzusägende Teil 18 des Stangenmaterials 17 von den Spannbacken 5 des Spannstockes 4 während des Sägevorgangs gehalten werden kann. Der Spannstock 4 weist einen hier nicht dargestellten Anschlag auf, gegen welchen das Stangenmaterial 17 zugeführt wird, um eine exakte Länge des Stangenmaterials 17 absägen zu können.

Die durch die Sägeeinrichtung 16 abgetrennten Werkstückrohlinge 18 werden mittels Schlitten 3 wiederum der Bearbeitungsstation 10 zugeführt, wo die Werkstückrohlinge 18 maßgenau gefräst und mit einem Zentrum versehen werden. Wenn die durch die Sägeeinrichtung 16 erzeugbare Maßgenauigkeit ausreicht, kann die Fräseinrichtung 15 auch entfallen.

Bei dieser Variante befindet sich außerdem die Fräseinrichtung 15 vertikal oberhalb der Zentriereinrichtung 14 und nicht umgekehrt wie bei der zuerst beschriebenen Variante. Im übrigen stimmt die Funktionsweise dieser Variante mit der zuerst beschriebenen Variante überein. Die Werkstückrohlinge 18 werden also mittels des CNC-gesteuerten Schlittens 3 zunächst der Fräseinrichtung 15 und dann der Zentriereinrichtung 14 zugeführt, wobei die Werkstückrohlinge 18 während der Bearbeitung durch die Spannbacken 5, 6 des Spannstockes 4 gehalten werden. Die bearbeiteten Werkstücke 19 werden dann mittels des Schlittens 3 auf eine Werkstückablageposition 20 abgelegt.

Mit der erfindungsgemäßen Werkzeugmaschine können Werkstücke in geschickter Weise und besonders platzsparend mit einem Zentrum versehen werden. Die Werkzeugmaschine ist insbesondere zur Herstellung von Wellen aus Schmiedestücken oder Fließpreßteilen, beispielsweise Nockenoder Getriebewellen, geeignet.

### Bezugszeichenliste

- 1: Untergestell
- 2: Maschinenständer
- 3: Schlitten
- 4: Spannstock
- 5: Spannbacke
- 6: Spannbacke
- 7: X-Führungen
- 8: Z-Führungen
- 9: Werkstückaufnahmeposition
- 10: Bearbeitungsstation
- 11: Werkstückablageposition
- 12: Werkstückrohling
- 13: Bearbeitetes Werkstück
- 14: Zentriereinrichtung
- 15: Fräseinrichtung
- 16: Sägevorrichtung
- 17: Stangenmaterial
- 18: Werkstückrohling
- 19: Bearbeitetes Werkstück
- 20: Werkstückablageposition
- X: Bewegungsrichtung
- Z: Bewegungsrichtung

## Patentansprüche

1. Werkzeugmaschine zum Anbringen von Zentren an wellenförmigen Werkstücken, insbesondere Schmiedestücke oder Fließpreßteile, durch Drehbearbeitung des Werkstückes (12, 18), insbesondere Bohren zentraler Ausnehmungen oder Abdrehen von zentralen Zapfen an zwei voneinander abgewandten Stirnseiten des Werkstükkes (12, 18), mit einer Bearbeitungsstation (10) mit mindestens einer Zentriereinrichtung (14) zum Herstellen der Zentren und Mitteln zum Zuführen und Abführen der Werkstücke (12, 18) zur Bearbeitungsstation (10), wobei eine Greifvorrichtung (4) für die Werkstücke (12, 18) vorgesehen ist, durch welche die Werkstücke (12, 18) von einer Werkstückaufnahmeposition (9) einer Bearbeitungsstation (10) zuführbar und während der Herstellung der Zentren fixierbar sind,
**dadurch gekennzeichnet,**
**daß** die Greifvorrichtung (4) derart ausgebildet ist, daß die Werkstücke (12, 18) durch die Greifvorrichtung (4) von der Werkstückaufnahmeposition (9) aufnehmbar sind.

2. Werkzeugmaschine nach Anspruch 1,
**dadurch gekennzeichnet,**
**daß** die Greifvorrichtung (4) bevorzugt zwei hydraulisch betätigbare Spannbackenpaare (5, 6) für die Werkstücke (12, 18) aufweist.

3. Werkzeugmaschine nach Anspruch 1 oder 2,
**dadurch gekennzeichnet,**
**daß** die Greifvorrichtung (4) auf einem in mindestens zwei zueinander senkrechten Richtungen (X, Z) verfahrbaren Schlitten (3) angeordnet ist.

4. Werkzeugmaschine nach Anspruch 3,
**dadurch gekennzeichnet,**
**daß** der Schlitten (3) numerisch gesteuert ist.

5. Werkzeugmaschine nach einem der vorhergehenden Ansprüche,
**dadurch gekennzeichnet,**
**daß** eine Fräseinrichtung (15) vorhanden ist, durch welche die Werkstücke (12, 18) stirnseitig ablängbar sind.

6. Werkzeugmaschine nach Anspruch 5,
**dadurch gekennzeichnet,**
**daß** die Fräseinrichtung (15) und die Zentriereinreichtung (14) vertikal übereinander angeordnet sind.

7. Werkzeugmaschine nach Anspruch 5 oder 6,
**dadurch gekennzeichnet,**
**daß** die Werkstücke (12, 18) durch die Greifvorrichtung (4) zuerst der Fräseinrichtung (15) und dann der Zentriereinrichtung (14) zuführbar sind.

8. Werkzeugmaschine nach einem der vorhergehenden Ansprüche,
**dadurch gekennzeichnet,**
**daß** eine Sägeeinrichtung (16) zum Ablängen von Stangenmaterial (17) vorhanden ist.

9. Werkzeugmaschine nach Anspruch 8,
**dadurch gekennzeichnet,**
**daß** das abzusägende Stück (18) während des Sägens von der Greifvorrichtung (4) gehalten wird.

10. Werkzeugmaschine nach einem der vorhergehenden Ansprüche,
**dadurch gekennzeichnet,**
**daß** mindestens ein Transportband zum Zu- und/oder Abführen der Werkstücke (12, 13, 18, 19) vorhanden ist.

11. Werkzeugmaschine nach Anspruch 10,
**dadurch gekennzeichnet,**
**daß** die Werkstückaufnahmeposition (9) und die Werkstückablageposition (11) auf voneinander abgewandten Seiten der Bearbeitungsstation (10) angeordnet sind.

## Claims

1. A machine tool for the machining of centers in shaft-like workpieces, in particular forged parts or extruded parts, by turning the workpiece (12, 18), in particular drilling central recesses or parting off central spigots at two end faces of the workpiece (12, 18) remote from one another, having a working station (10) with at least one centering device (14) for manufacturing the centers and with means for supplying the workpieces (12, 18) to and carrying them away from the working station (10), wherein a gripping apparatus (4) for the workpieces (12, 18) is provided, by which the workpieces (12, 18) can be supplied from a workpiece reception position (9) to a working station (10) and can be fixed during the manufacture of the centers, **characterized in that** the gripping apparatus (4) is formed such that the workpieces (12, 18) can be taken up from the workpiece reception position (9) by the gripping apparatus (4).

2. A machine tool in accordance with claim 1, **characterized in that** the gripping apparatus (4) preferably has two hydraulically operable clamping jaw pairs (5, 6) for the workpieces (12, 18).

3. A machine tool in accordance with claim 1 or claim 2, **characterized in that** the gripping apparatus (4) is arranged on a carriage (3) which can be moved in at least two directions (X, Z) perpendicular to one another.

4. A machine tool in accordance with claim 3, **characterized in that** the carriage (3) is numerically controlled.

5. A machine tool in accordance with any one of the preceding claims, **characterized in that** a milling device (15) is present by which the workpieces (12, 18) can be cut to length at the end face.

6. A machine tool in accordance with claim 5, **characterized in that** the milling device (15) and the centering device (14) are arranged vertically above one another.

7. A machine tool in accordance with claim 5 or claim 6, **characterized in that** the workpieces (12, 18) can first be delivered by the gripping apparatus (4) to the cutting device (15) and then to the centering device (14).

8. A machine tool in accordance with any one of the preceding claims, **characterized in that** a sawing device (16) is present for cutting bar material (17) into lengths.

9. A machine tool in accordance with claim 8, **characterized in that** the piece (18) to be sawn off is held by the gripping apparatus (4) during sawing.

10. A machine tool in accordance with any one of the preceding claims, **characterized in that** at least one transport belt is present for the delivering and/or carrying off of the workpieces (12, 13, 18, 19).

11. A machine tool in accordance with claim 10, **characterized in that** the workpiece reception position (9) and the workpiece unloading position (11) are arranged on sides of the working station (10) remote from one another.

## Revendications

1. Machine-outil pour réaliser des centres sur des pièces à oeuvrer en forme d'arbre, en particulier des pièces forgées ou des pièces extrudées, par usinage rotatif de la pièce à oeuvrer (12, 18), en particulier par perçage d'évidements centraux ou par tournage de tenons centraux sur deux faces frontales détournées l'une de l'autre de la pièce à oeuvrer (12, 18), comportant une station d'usinage (10) avec au moins un dispositif de centrage (14) pour réaliser les centres et avec des moyens pour amener et enlever les pièces à oeuvrer (12, 18) vis-à-vis de la station d'usinage (10), un dispositif de préhension (4) pour les pièces à oeuvrer (12, 18), au moyen duquel les pièces à oeuvrer (12, 18) peuvent être amenées depuis une position (9) de réception de pièces à oeuvrer jusqu'à une station d'usinage (10) et être fixées pendant la réalisation des centres, **caractérisée en ce que** le dispositif de préhension (4) est ainsi réalisé que les pièces à oeuvrer (12, 18) sont susceptibles d'être reçues depuis la position (9) de réception de pièces à oeuvrer par le dispositif de préhension (4).

2. Machine-outil selon la revendication 1, **caractérisée en ce que** le dispositif de préhension (4) comprend de préférence deux paires de mâchoires de serrage (5, 6) actionnées par voie hydraulique pour les pièces à oeuvrer (12, 18).

3. Machine-outil selon l'une ou l'autre des revendications 1 et 2, **caractérisée en ce que** le dispositif de préhension (4) est agencé sur un chariot (3) mobile dans au moins deux directions (X, Z) perpendiculaires l'une à l'autre.

4. Machine-outil selon la revendication 3, **caractérisée en ce que** le chariot (3) est commandé par voie numérique.

5. Machine-outil selon l'une quelconque des revendications précédentes, **caractérisée en ce qu'**il est prévu un dispositif à fraiser (15) au moyen duquel les pièces à oeuvrer (12, 18) peuvent être mises à longueur du côté frontal.

6. Machine-outil selon la revendication 5, **caractérisée en ce que** le dispositif à fraiser (15) et le dispositif à centrer (14) sont agencés verticalement l'un au-dessus de l'autre.

7. Machine-outil selon l'une ou l'autre des revendications 5 et 6, **caractérisée en ce que** les pièces à oeuvrer (12, 18) peuvent être amenées par le dispositif de préhension (4) tout d'abord au dispositif à fraiser (15) et ensuite au dispositif à centrer (14).

8. Machine-outil selon l'une quelconque des revendications précédentes, **caractérisée en ce qu'**il est prévu un dispositif à scier (16) pour mettre à longueur un matériau (17) en forme de barre.

9. Machine-outil selon la revendication 8, **caractérisée en ce que** la pièce à scier (18) est retenue pendant le sciage par le dispositif de préhension (4).

10. Machine-outil selon l'une quelconque des revendications précédentes, **caractérisée en ce qu'**il est prévu au moins une bande de transport pour amener et/ou enlever les pièces à oeuvrer (12, 13, 18, 19).

11. Machine-outil selon la revendication 10, **caractérisée en ce que** la position (9) de réception de pièces à oeuvrer et la position (11) de déposition de pièces à oeuvrer sont prévues sur des côtés détournés l'un de l'autre de la station d'usinage (10).
